# EUROPEAN PATENT APPLICATION

(11) **EP 4 435 889 A1**
(43) Date of publication of application: **25.09.2024**
(21) Application number: 22894670.3
(22) Date of filing: 08.11.2022
(51) Int. Cl.: H01M 4/36

(54) **ADDITIVE FOR SUPPLEMENTING LITHIUM TO POSITIVE ELECTRODE, AND PREPARATION METHOD THEREFOR AND USE THEREOF**

(30) Priority: 18.11.2021 CN 202111371882
(71) Applicant: Shenzhen Innovazone Technology Co., Ltd., Shenzhen, Guangdong 518000 (CN)
(72) Inventor: LIN, Lvhuan, Shenzhen, Guangdong 518000 (CN); WAN, Yuanxin, Shenzhen, Guangdong 518000 (CN); KONG, Lingyong, Shenzhen, Guangdong 518000 (CN); ZHU, Chengben, Shenzhen, Guangdong 518000 (CN); ZHONG, Wen, Shenzhen, Guangdong 518000 (CN)
(74) Representative: Patentwerk B.V.
(86) International application number: PCT/CN2022/130560
(87) International publication number: WO 2023/088133

(57) **Abstract**

A cathode lithium-supplementing additive, a preparation method, and an application thereof are provided. The cathode lithium-supplementing additive includes: a lithium-containing core, and a cladding layer formed on a surface of the lithium-containing core, in which, a material of the cladding layer is selected from a conductive hydrophobic polymer having a surface modified with a hydrophobic enhancer. On the one hand, the formed cladding layer can make up for the defect like poor electronic conductivity of the lithium-containing compound and improve the electronic conductivity, in the meanwhile, the cladding layer can act as a conductive agent in the electrode plate and thus reduce the amount of conductive agent to be added to the electrode plate; and on the other hand, since the polymer has the surface modified with the hydrophobic enhancer, hydrophobic groups are provided, which further provides a hydrophobic barrier, so as to effectively improve the stability of the lithium-containing core in the air, to effectively block moisture and carbon dioxide in the air from contacting or reacting with the lithium-supplementing material in the core, to prevent the lithium-containing compound from reacting with water or being defective, and to protect the stability of the lithium-supplementing material.

## Description

This application claims the priority of the Chinese patent application submitted to the CNIPA on Nov. 18, 2021, with an application number 202111371882.9 and titled "CATHODE LITHIUM-SUPPLEMENTING ADDITIVE AND PREPARATION METHOD AND APPLICATION THEREOF", the entire contents of which are incorporated by reference in this application.

### TECHNICAL FIELD

The present application relates to the technical field of lithium-ion batteries, more particularly to a cathode lithium-supplementing additive, a preparation method thereof and an application thereof.

### BACKGROUND

During the first charging process of a lithium-ion battery, a solid electrolyte interface (SEI) film will be formed at an interface between the anode and the electrolyte. Although the formation of this irreversible SEI film can improve the interface stability of the anode material, it also consumes a large amount of electrolyte and Li⁺ released from the cathode material, causing a great capacity loss and reduction of the initial Coulombic efficiency.

In order to solve the above problems, researchers use lithium-supplementing technology to compensate for the consumption of active lithium caused by the formation of the SEI film. Common lithium-supplementing technologies include cathode lithium-supplementing technology and anode lithium-supplementing technology. The anode lithium-supplementing technology mostly uses a lithium foil, a lithium powder, a Li-organic composite solution, a lithiated anode material, and other materials to supplement lithium. However, these lithiation reagents have poor chemical stability and are incompatible with air and polar solvents, which poses extremely high demands on the production and use environments and has safety risks. The cathode lithium-supplementing technology uses Li⁺ deintercalated from a lithium-rich compound to supplement the consumed cathode active lithium due to the formation of the anode SEI film during the first charging process, thus reducing capacity loss and improving the initial Coulombic efficiency. Existing reported cathode lithium-supplementing additives include Li₃N, Li₂S, Li₂O, Li₂O₂, Li₂NiO₂, and Li₅FeO₄, which can be mixed with traditional cathode materials such as LiCoO₂, LiMn₂O₄, and LiFePO₄, to form a common cathode, so as to improve both the initial Coulombic efficiency and the reversible capacity. However, most of these lithium supplement additives themselves have defects such as poor electronic conductivity and reaction with moisture, which affects the electrical performance of lithium-ion batteries during use. Moreover, the storage and use conditions are high, which is not conducive to wide application.

### SUMMARY OF INVENTION

### TECHNICAL PROBLEMS

One of the purposes of embodiments of the present application is to provide a cathode lithium-supplementing additive and a preparation method thereof and an application thereof, aiming to solve the technical problems in the prior art that the cathode lithium-supplementing additive is sensitive to air and moisture and has poor electronic conductivity.

### TECHNICAL SOLUTIONS TO PROBLEMS

### TECHNICAL SOLUTIONS

In order to solve the above technical problems, embodiments of the present application adopt the following technical solutions:

In a first aspect, a cathode lithium-supplementing additive is provided. The cathode lithium-supplementing additive comprises: a lithium-containing core, and a cladding layer formed on a surface of the lithium-containing core, in which, a material of the cladding layer is selected from a conductive hydrophobic polymer having a surface modified with a hydrophobic enhancer.

In a second aspect, a cathode lithium-supplementing additive is provided. The method comprises the following steps:
providing a lithium-containing material as a core body, a hydrophobic enhancer, and a conductive hydrophobic polymer according to the cathode lithium-supplementing additive;
subjecting the conductive hydrophobic polymer and the hydrophobic enhancer to a first mixing process in a first organic solvent whereby obtaining the conductive hydrophobic polymer having the surface modified with the hydrophobic enhancer;
subjecting the conductive hydrophobic polymer having the surface modified with the hydrophobic enhancer and the lithium-containing material as the core body to a second mixing process in a second organic solvent, whereby obtaining a cathode lithium-supplementing additive mixture; and
post-processing the cathode lithium-supplementing additive mixture in an inert atmosphere, whereby obtaining the cathode lithium-supplementing additive.

In a third aspect, a cathode plate is provided. The cathode plate comprises: a cathode current collector, and a cathode active material layer arranged on the cathode current collector. The cathode active material layer comprises: a cathode active material, a binder, a conductive agent, and a cathode lithium-supplementing additive. The cathode lithium-supplementing additive is selected from the cathode lithium-supplementing additive or is prepared by the method for preparing the cathode lithium-supplementing additive.

In a fourth aspect, a secondary battery is provided. The secondary battery comprises the cathode plate.

### BENEFICIAL EFFECT OF INVENTION

### BENEFICIAL EFFECTS

Beneficial effects of the cathode lithium-supplementing additive provided by embodiments of the present application are summarized as follows: the cladding layer is formed on the surface of the lithium-containing core, so that the cathode lithium-supplementing additive is prepared into the core-shell structure in a cladding manner. The cladding layer formed as the shell is a conductive hydrophobic polymer cladding layer having the surface modified with the hydrophobic enhancer. On the one hand, the cladding layer can make up for the defect like poor electronic conductivity of the lithium-containing compound and improve the electronic conductivity, in the meanwhile, the cladding layer can act as a conductive agent in the electrode plate and thus reduce the amount of conductive agent to be added to the electrode plate; and on the other hand, since the polymer has the surface modified with the hydrophobic enhancer, hydrophobic groups are provided, which further provides a hydrophobic barrier, so as to effectively improve the stability of the lithium-containing core in the air, to effectively block moisture and carbon dioxide in the air from contacting or reacting with the lithium-supplementing material in the core, to prevent the lithium-containing compound from reacting with water or being defective, and to protect the stability of the lithium-supplementing material. In this way, the cathode lithium-supplementing additive, when being used in the lithium ion battery, can compensate for the loss of the active lithium in the electrode active material during the first charge and discharge process, improve the reversible capacity and the initial Coulombic efficiency, as well as improve the electronic conductivity and electrochemical performance of the battery.

Beneficial effects of the preparation method of the cathode lithium-supplementing additive provided by embodiments of the present application are summarized as follows: in the preparation method of the cathode lithium-supplementing additive, the lithium-containing material as the core body and the conductive hydrophobic polymer having the surface modified with the hydrophobic enhancer are subjected to the mixing processing to obtain the cathode lithium-supplementing additive mixture, which is then post-processed to obtain the cathode lithium-supplementing additive. The prepared cathode lithium-supplementing additive has a core-shell structure. The cladding layer as the shell is the conductive hydrophobic polymer having the surface modified with the hydrophobic enhancer, which can effectively isolate the moisture and carbon dioxide in the air from contacting or reacting with the lithium-supplementing material in the core, thereby having a certain protective effect on the lithium-containing core. Meanwhile, the conductive hydrophobic polymer having the surface modified with the hydrophobic enhancer as the cladding layer can improve the electronic conductivity and is beneficial to full playing of the electrochemical performance of the material. Moreover, the preparation method is simple in process, does not require expensive equipment, and is suitable for wide application.

Beneficial effects of the cathode plate provided by embodiments of the present application are summarized as follows: the cathode lithium-supplementing additive is added to the cathode plate material. Since the lithium-containing core of the cathode lithium-supplementing additive is rich in lithium, During the use of the battery, into which the cathode plate is packaged, lithium ions can be released to compensate for the loss of active lithium in the electrode active material during the first charge and discharge process, thereby improving the reversible capacity and initial Coulombic efficiency, improving the lithium-supplementing effect, and being suitable for industrial production.

Beneficial effects of the secondary battery provided by embodiments of the present application are summarized as follows: the secondary battery comprises a cathode plate, which comprises the cathode lithium-supplementing additive, so that the secondary battery has a higher initial Coulombic efficiency and excellent cycle stability, improved electronic conductivity and overall electrochemical performance of the battery, thus being conducive to wide application.

### BRIEF DESCRIPTION OF THE DRAWINGS

### DESCRIPTION OF THE DRAWINGS

In order to more clearly illustrate the technical solutions in embodiments of the present application, the drawings needed to be used in the description of the embodiments or exemplary technologies will be briefly introduced below. Obviously, the drawings in the following description are only for the purpose of the present application. For some embodiments, those skilled in the art may obtain other drawings based on these drawings without creative efforts.
FIG. 1 is a schematic structural diagram of a cathode lithium-supplementing additive provided by an embodiment of the present application; and
FIG. 2 is infrared spectra of a conductive hydrophobic polymer, a lithium-supplementing core, and a cathode lithium-supplementing additive obtained after cladding provided in Example A2 of the present application.

### DETAILED DESCRIPTION OF THE EMBODIMENTSIMPLEMENTION MANNER OF INVENTION

In order to make the objectives, technical solutions, and advantages of the present application clearer, the present application will be described in further details in accompanying with the following drawings and embodiments. It should be understood that the specific embodiments described herein are only used to explain the present application, not intended to limit the present application.

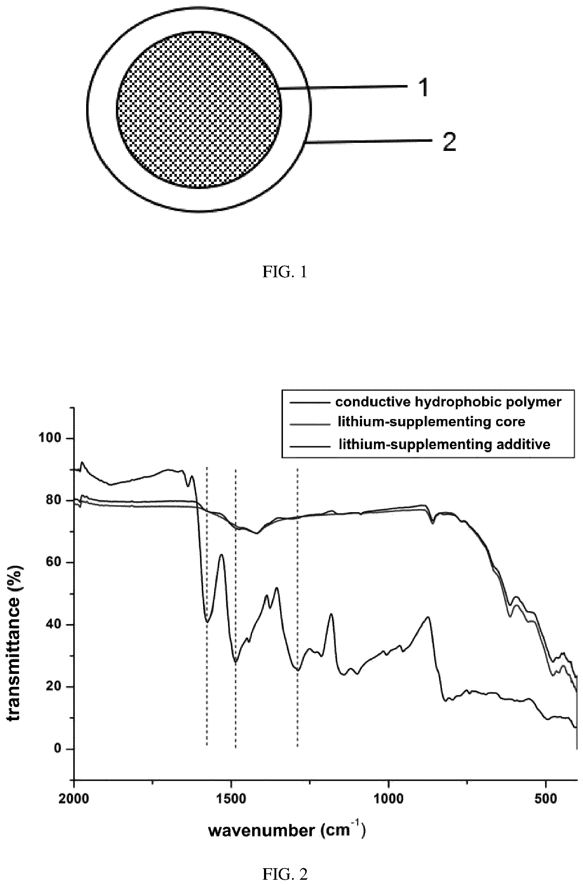

A first aspect of embodiments of the present application provides a cathode lithium-supplementing additive, as shown in FIG. 1, the cathode lithium-supplementing additive comprises: a lithium-containing core 1, and a cladding layer 2 formed on a surface of the lithium-containing core 1. A material of the cladding layer 2 is selected from a conductive hydrophobic polymer having a surface modified with a hydrophobic enhancer.

In the cathode lithium-supplementing additive provided by embodiments of the first aspect of the present application, the cladding layer is formed on the surface of the lithium-containing core, so that the cathode lithium-supplementing additive is prepared into the core-shell structure in a cladding manner. The cladding layer formed as the shell is a conductive hydrophobic polymer cladding layer having the surface modified with the hydrophobic enhancer. On the one hand, the cladding layer can make up for the defect like poor electronic conductivity of the lithium-containing compound and improve the electronic conductivity, in the meanwhile, the cladding layer can act as a conductive agent in the electrode plate and thus reduce the amount of conductive agent to be added to the electrode plate; and on the other hand, since the polymer has the surface modified with the hydrophobic enhancer, hydrophobic groups are provided, which further provides a hydrophobic barrier, so as to effectively improve the stability of the lithium-containing core in the air, to effectively block moisture and carbon dioxide in the air from contacting or reacting with the lithium-supplementing material in the core, to prevent the lithium-containing compound from reacting with water or being defective, and to protect the stability of the lithium-supplementing material. In this way, the cathode lithium-supplementing additive, when being used in the lithium ion battery, can compensate for the loss of the active lithium in the electrode active material during the first charge and discharge process, improve the reversible capacity and the initial Coulombic efficiency, as well as improve the electronic conductivity and electrochemical performance of the battery.

In some embodiments, a coverage rate of the cladding layer on the surface of the lithium-containing core is above 80%. Since the material of the cladding layer is the conductive hydrophobic polymer having the surface modified with the hydrophobic enhancer, coupling can occur between the surface modifying hydrophobic enhancer, so that the polymer is interconnected to form a grid structure, making the coverage rate of the cladding layer on the surface of the lithium-containing core above 80%, ensuring that a large amount of the moisture and carbon dioxide in the air can be effectively prevented from contacting and reacting with the core lithium-supplementing material, thus preventing the lithium-containing compound from reacting with the water and becoming ineffective, and protecting the stability of the lithium-supplementing material.

In some embodiments, in the provided cathode lithium-supplementing additive, a material of the cladding layer 2 includes a material selected from the conductive hydrophobic polymer having the surface modified with the hydrophobic enhancer, in which, the hydrophobic enhancer is selected from a fluorine-containing silane coupling agent, the fluorine-containing silane coupling agent contains "Si-O" bonds and "F" groups, where the fluorine-containing silane coupling agent can be self-crosslinked to form a coupling network, and the fluorine-containing groups acting as the branch chains are connected, which further enhances the hydrophobic effect, preventing the lithium-containing core from being affected by the water vapor and carbon dioxide in the air.

In some embodiments, the fluorine-containing silane coupling agent comprises one or more of 1H, 1H,2H,2H-perfluorodecyltriethoxysilane, dodecafluoroheptylpropylmethyldimethoxysilane, dodecafluoroheptylpropyltrimethoxysilane, 1H,1H,2H,2H-perfluorodecyltrimethoxysilane, 3,3,3-trifluoropropylmethyldimethoxysilane, 3,3,3-trifluoropropyltrimethoxysilane, 1H,1H,2H,2H-perfluorooctyltriethoxysilane, and 1H, 1H,2H,2H-perfluorooctyltrimethoxysilane.

In some embodiments, the cladding layer comprises: an inner layer, which has a structure of a backbone containing a conductive polymer, and a protective outer layer, which has a structure of fluorine-containing branches self-polymerized at a surface of the conductive polymer of the inner layer to form a Si-O-Si grid structure, whereby being adsorbed to the surface of the conductive polymer. Since the material of the cladding layer is selected from the conductive hydrophobic polymer having the surface modified with the hydrophobic enhancer, in the formed cladding layer, the conductive hydrophobic polymer serves as the inner layer, and the "Si-O" bonds in the fluorine-containing silane coupling agent for modifying the conductive hydrophobic polymer can undergo cross-linking reactions to generate "Si-O-Si" bonds that can be polymerized to form the coupling network, which is attached and wrapped on the surface of the conductive hydrophobic polymer. The fluorine-containing silane coupling agent as the fluorine-containing branches can form the protective outer layer, which further forms a hydrophobic protective outer layer, thus enhancing the hydrophobic effect and making the lithium-containing core not be affected by the water vapor or carbon dioxide in the air.

In some embodiments, the conductive hydrophobic polymer comprises one or more of a polyacetylene, a polyaniline, a polypyrrole, a polythiophene, a polyphenylene, a poly(p-phenylene vinylene), and any derivative thereof. The use of the conductive hydrophobic polymer as the main material of the cladding layer can effectively improve the stability of the lithium-containing core in the air, effectively block the moisture and carbon dioxide in the air from contacting and reacting with the lithium-supplementing material in the core, and prevent the lithium-containing core from reacting with the water or becoming defective, thus protecting the stability of the lithium-supplementing material. On the other hand, due to having good conductivity, the conductive hydrophobic polymer material is used as a shell material for the cathode lithium-supplementing additive, which can improve the electronic conductivity and electrochemical performance of the battery.

In some specific embodiments, the material of the cladding layer 2 of the cathode lithium-supplementing additive is selected from the polyacetylene, which is a polymer material having a structural unit of (CH=CH)ₙ. As the material of the cladding layer 2, in use, the polyacetylene is adapted to form a grid after heat treatment, and under the action of the fluorine-containing silane coupling agent, the density of the grid structure is improved, and the formed dense cladding layer may densely cover the lithium-containing core 1, so that the lithium-containing inner layer is effectively isolated from the water vapor and carbon dioxide in the air, thereby improving the stability of the lithium-containing core 1; moreover, the polyacetylene has a certain conductivity, which can improve the electrochemical performance of the battery.

In some specific embodiments, the material of the cladding layer 2 of the cathode lithium-supplementing additive is selected from the polyaniline. The polyaniline is adapted to form a dense film layer covering the surface of the lithium-containing core 1 during the heat treatment process, moreover, due to the action of the fluorine-containing silane coupling agent, which is adapted to form a protective outer layer in a structure of fluorine-containing branches attached to the structure of the backbone containing the conductive polymer, the water vapor and carbon dioxide in the air is further isolated. In addition, the electrical activity of the polyaniline originates from the P electron conjugated structure in the molecular chain. As the P electron system in the molecular chain expands, the P bonding state and the P* anti-bonding state form a valence band and a conduction band respectively, thereby showing higher conductivity.

In some specific embodiments, the material of the cladding layer 2 of the cathode lithium-supplementing additive is selected from the polypyrrole. The polypyrrole is a five-membered C, N-heterocyclic molecule, a heterocyclic conjugated conductive polymer, and has a conductivity that may reach 10²S/cm with good stability, thereby being conducive to effective lithium-supplementation while improving the electronic conductivity of the battery.

In some embodiments, a thickness of the cladding layer 2 is 1 nm to 100 nm. By controlling the thickness of the cladding layer 2 to be moderate, it is beneficial to better isolating the lithium-containing core 1 from interacting with the water vapor or carbon dioxide in the air, while ensuring high battery charge and discharge performance. If the thickness of the cladding layer 2 is smaller than 1 nm, it will be difficult to isolate the air and the moisture, which may make the lithium-containing core 1 have poor stability, easily defective, and fail to provide good protection. If the thickness of the cladding layer 2 is greater than 100 nm, a resulting particle of the cathode lithium-supplementing additive obtained from the cladding will become larger, which will reduce the charge and discharge performance of the lithium-ion battery fabricated based on the lithium-supplementing additive.

In some specific embodiments, the thickness of the cladding layer 2 is selected from 1 nm, 5 nm, 10 nm, 15 nm, 20 nm, 25 nm, 30 nm, 35 nm, 40 nm, 45 nm, 50 nm, 55 nm, 60 nm, 65 nm, 70 nm, 75 nm, 80 nm, 85 nm,90 nm,95 nm, and 100 nm.

In some embodiments, in the cathode lithium-supplementing additive provided, the cathode lithium-supplementing additive comprises the lithium-containing core 1, a material of the lithium-containing core comprises at least one of LiₓM_{y}O_{z} and Li_{w}A, in which, 0<x≤6, 0<y≤3, 0<z≤4, and 0<w≤5; M comprises at least one of Fe, Co, Ni, Mn, V, Cu, Mo, Al, Ti, Mg, and Zr; and A comprises at least one of C, N, O, P, S, F, B, and Se. The lithium-containing core provided can be provided as a cathode material for providing lithium ions, thus realizing the lithium-supplementation of the cathode, such that when being used in the lithium-ion battery, the cathode lithium-supplementing additive is able to compensate for the loss of the active lithium in initial charge and discharge of the electrode active material, thereby improving the reversible capacity and initial Coulombic efficiency.

In some embodiments, a particle size of the lithium-containing core is 0.01 µm to 10 µm. By controlling the particle size of the lithium-containing core 1 to be moderate, it is conductive to make the obtained cathode lithium-supplementing additive better dispersed, perform better lithium supplementation, and increase the battery rate. If the particle size of the lithium-containing core 1 is smaller than 0.01 µm, not only will the agglomeration and uneven dispersion occur, but also the compacted density of the electrode plate will decrease. If the particle size of the lithium-containing core 1 is greater than 10 µm, the rate performance will be decreased.

In some specific embodiments, the particle size of the lithium-containing core 1 is selected from the group consisting of 0.01 µm, 0.05 µm, 0.1 µm, 0.5 µm, 1 µm, 1.5 µm, 2 µm, 2.5 µm, 3 µm, 3.5 µm, 4 µm, 4.5 µm, and 5 µm., 5.5 µm, 6 µm, 6.5 µm, 7 µm, 7.5 µm, 8 µm, 8.5 µm, 9 µm, 9.5 µm, and 10 µm.

Based on the above embodiments of the core 1 and the cladding layer 2, in some embodiments, a mass ratio of the lithium-containing core to the cladding layer is (90 to 99.9) : (0.1 to 10). If the mass of the cladding layer 2 is too small, the cladding is incomplete or the thickness of the cladding layer 2 is too small, which may easily cause the lithium-containing core 1 to contact with the water vapor or carbon dioxide in the air, thereby affecting the stability of the lithium-containing core 1. If the mass of the cladding layer 2 is too large, the thickness of the cladding layer 2 is too large, which may increase the path for the lithium ion diffusion, reduce the lithium-supplement effect, and reduce the charge and discharge performance of the lithium-ion battery fabricated based on the lithium-supplementing additive.

A second aspect of embodiments of the present application provides method for preparing a cathode lithium-supplementing additive, including the following steps:

S01, providing a lithium-containing material as a core body, a hydrophobic enhancer, and a conductive hydrophobic polymer according to the cathode lithium-supplementing additive;

S02, subjecting the conductive hydrophobic polymer and the hydrophobic enhancer to a first mixing process in a first organic solvent whereby obtaining the conductive hydrophobic polymer having the surface modified with the hydrophobic enhancer;

S03, subjecting the conductive hydrophobic polymer having the surface modified with the hydrophobic enhancer and the lithium-containing material as the core body to a second mixing process in a second organic solvent, whereby obtaining a cathode lithium-supplementing additive mixture; and

S04, post-processing the cathode lithium-supplementing additive mixture in an inert atmosphere, whereby obtaining the cathode lithium-supplementing additive.

In the preparation method of the cathode lithium-supplementing additive provided in the second aspect of embodiments of the present application, the lithium-containing material as the core body and the conductive hydrophobic polymer having the surface modified with the hydrophobic enhancer are subjected to the mixing processing to obtain the cathode lithium-supplementing additive mixture, which is then post-processed to obtain the cathode lithium-supplementing additive. The prepared cathode lithium-supplementing additive has a core-shell structure. The cladding layer as the shell is the conductive hydrophobic polymer having the surface modified with the hydrophobic enhancer, which can effectively isolate the moisture and carbon dioxide in the air from contacting or reacting with the lithium-supplementing material in the core, thereby having a certain protective effect on the lithium-containing core. Meanwhile, the conductive hydrophobic polymer having the surface modified with the hydrophobic enhancer as the cladding layer can improve the electronic conductivity and is beneficial to full playing of the electrochemical performance of the material. Moreover, the preparation method is simple in process, does not require expensive equipment, and is suitable for wide application.

In step S01, the lithium-containing material as the core body, the hydrophobic enhancer, and the conductive hydrophobic polymer are provided according to the cathode lithium-supplementing additive.

In some embodiment, a material of the lithium-containing core comprises at least one of LiₓM_{y}O_{z} and Li_{w}A, in which, 0<x≤6, 0<y≤3, 0<z≤4, and 0<w≤5; M comprises at least one of Fe, Co, Ni, Mn, V, Cu, Mo, Al, Ti, Mg, and Zr; and A comprises at least one of C, N, O, P, S, F, B, and Se.

In some embodiment, the fluorine-containing silane coupling agent comprises one or more of 1H, 1H,2H,2H-perfluorodecyltriethoxysilane, dodecafluoroheptylpropylmethyldimethoxysilane, dodecafluoroheptylpropyltrimethoxysilane, 1H,1H,2H,2H-perfluorodecyltrimethoxysilane, 3,3,3-trifluoropropylmethyldimethoxysilane, 3,3,3-trifluoropropyltrimethoxysilane, 1H,1H,2H,2H-perfluorooctyltriethoxysilane, and 1H,1H,2H,2H-perfluorooctyltrimethoxysilane.

In some embodiment, the conductive hydrophobic polymer comprises one or more of a polyacetylene, a polyaniline, a polypyrrole, a polythiophene, a polyphenylene, a poly(p-phenylene vinylene), and any derivative thereof.

In step S02, the conductive hydrophobic polymer and the hydrophobic enhancer in the first organic solvent are subjected to the first mixing process to obtain the conductive hydrophobic polymer having the surface modified with the hydrophobic enhancer.

In some embodiment, the step of subjecting the conductive hydrophobic polymer and the hydrophobic enhancer to the first mixing process in the first organic solvent comprises: mixing the conductive hydrophobic polymer and the hydrophobic enhancer in the first organic solvent at 25°C to 80°C for 30 mins to 120 mins, and drying a resulting mixture at 80°C to 120°C for 3 hrs to 10 hrs.

In some embodiment, the first organic solvent is one or more selected from an alcohol solvent or an alcohol-water mixed solvent.

In some embodiment, a mass ratio of the conductive hydrophobic polymer, the hydrophobic enhancer, and the first organic solvent is 100 : (0.2 to 2) : (100 to1000).

In step S03, the conductive hydrophobic polymer having the surface modified with the hydrophobic enhancer and the lithium-containing material as the core body are subjected to a second mixing process in a second organic solvent to obtain a cathode lithium-supplementing additive mixture.

In some embodiments, the step of subjecting the conductive hydrophobic polymer having the surface modified with the hydrophobic enhancer and the lithium-containing material as the core body to the second mixing process in the second organic solvent comprises: subjecting the conductive hydrophobic polymer having the surface modified with the hydrophobic enhancer and the second organic solvent to a third mixing process, whereby obtaining a polymer mixture; and subjecting the polymer mixture and the lithium-containing material as the core body to a fourth mixing process.

In some embodiments, in the step of the third mixing process, a condition for the third mixing process is one or more selected from heating dissolution, stirring, ultrasonic wave treatment, and ball milling, In the step of the fourth mixing process, the fourth mixing process is performed under heating and stirring, wherein a heating temperature is 50°C to 150°C, a stirring speed is 100 rpm to 1000 rpm, and a heating and stirring duration is 1 hr to 6 hrs.

In some embodiments, the second organic solvent is one or more selected from benzene, toluene, xylene, tetrahydrofuran, 2-methyltetrahydrofuran, cyclohexane, n-hexane.

In some embodiments, a mass ratio of the conductive hydrophobic polymer having the surface modified with the hydrophobic enhancer, the lithium-containing material as the core body, and the second organic solvent is 1: (9 to 1000) : (50 to 1000). By controlling the mass ratio of the conductive hydrophobic polymer having the surface modified with the hydrophobic enhancer and the organic solvent, it can be ensured that the conductive hydrophobic polymer can form a fully dissolved true solution or a uniform and stable dispersion in the solvent.

In some embodiment, a mass ratio of the lithium-containing core to the cladding layer is (90 to 99.9) : (0.1 to 10). If the mass of the cladding layer is too small, the cladding is incomplete or the thickness of the cladding layer is too small, which may easily cause the lithium-containing core to contact with the water vapor or carbon dioxide in the air, thereby affecting the stability of the lithium-containing core. If the mass of the cladding layer is too large, the thickness of the cladding layer is too large, which may increase the path for the lithium ion diffusion, reduce the lithium-supplement effect, and reduce the charge and discharge performance of the lithium-ion battery fabricated based on the lithium-supplementing additive.

In step S04, the cathode lithium-supplementing additive mixture is post-processed under the inert atmosphere to obtain cathode lithium-supplementing additive.

In some embodiments, the step of the post-processing comprises: performing heat treatment, in which, a temperature of the heat treatment is 200°C to 400°C, and a duration for the heat treatment is 3 hrs to 10 hrs. Through the heat treatment, on the one hand, the organic solvent added in the pre-processing is completely removed; on the other hand, the material of the cladding layer is partially melted under the action of the heat treatment, which is beneficial to improving the density of the material of the cladding layer, making the obtained cathode lithium-supplementing additive has a uniform size and a complete shape.

A third aspect of embodiments of the present application provides a cathode plate. The cathode plate comprises: a cathode current collector, and a cathode active material layer arranged on the cathode current collector. The cathode active material layer comprises: a cathode active material, a binder, a conductive agent, and a cathode lithium-supplementing additive. The cathode lithium-supplementing additive is selected from the cathode lithium-supplementing additive as described in the above or is prepared by the method for preparing the cathode lithium-supplementing additive as described in the above.

In the cathode plate provided in the third aspect of embodiments of the present application, the cathode lithium-supplementing additive is added to the cathode plate material. Since the lithium-containing core of the cathode lithium-supplementing additive is rich in lithium, During the use of the battery, into which the cathode plate is packaged, lithium ions can be released to compensate for the loss of active lithium in the electrode active material during the first charge and discharge process, thereby improving the reversible capacity and initial Coulombic efficiency, improving the lithium-supplementing effect, and being suitable for industrial production.

In some embodiments, the cathode lithium-supplementing additive accounts for 1 wt. % to 15 wt. % of a mass content of the cathode active material layer. Since the lithium-supplementing additive provides a large amount of lithium, and most of the lithium cannot be recycled, if too much cathode lithium-supplementing additive is added to the positive active material layer, too much lithium may cause lithium ions to precipitate on the surface of the anode during the charging process, thereby producing lithium dendrites. If too little cathode lithium-supplementing additive is added, the initial efficiency of the battery may be reduced and the use thereof may be affected.

In some specific embodiments, the mass percentage of cathode lithium-supplementing additive in the cathode active material layer is selected from 1%, 2%, 3%, 4%, 5%, 6%, 7%, 8%, 9%, 10%, 11%, 12%, 13%, 14%, and 15%.

A fourth aspect of embodiments of the present application provides a secondary battery. The second battery comprises the cathode plate.

The secondary battery provided in the fourth aspect of the embodiments of the present application includes a cathode plate, and the cathode plate includes the above cathode lithium-supplementing additive, so that the secondary battery has a higher initial Coulombic efficiency and excellent cycle stability, improved electronic conductivity and overall electrochemical performance of the battery, thus being conducive to wide application.

Description will be made below with reference to specific embodiments.

### Example A1

### Cathode lithium-supplementing additive and preparation method thereof

A cathode lithium-supplementing additive includes a lithium-containing core and a cladding layer formed on a surface of the lithium-containing core. A material of the cladding layer includes a conductive hydrophobic polymer having a surface modified with a hydrophobic enhancer. The hydrophobic enhancer is selected from 1H, 1H, 2H, 2H-perfluorodecyltriethoxysilane, the conductive hydrophobic polymer is selected from polyacetylene, and the lithium-containing core is selected from Li₅FeO₄. An average particle size of the lithium-containing core is about 200 nm, and an average thickness of the cladding layer is about 10 nm.

The cathode lithium-supplementing additive was prepared by the following steps:
the lithium-containing material as the core body, the hydrophobic enhancer, and the conductive hydrophobic polymer were provided according to the cathode lithium-supplementing additive of Example A1;
the conductive hydrophobic polymer and the hydrophobic enhancer were mixed in a first organic solvent at 25°C for 30 mins, and then dried at 80°C for 3 hrs to obtain the conductive hydrophobic polymer having the surface modified with the hydrophobic enhancer, in which, a mass ratio of the conductive hydrophobic polymer, the hydrophobic enhancer, and the first organic solvent was 100:0.2:100, and the first organic solvent was selected from methanol;
the conductive hydrophobic polymer having the surface modified with the hydrophobic enhancer and the second organic solvent were mixed ultrasonically to obtain a polymer mixture, in which, a mass ratio of the conductive hydrophobic polymer to the second organic solvent was 1:100, and the organic solvent was selected from n-hexane;
thereafter, the polymer mixture and the lithium-containing material as the core body were subjected to a mixing process, in which, a mass ratio of the lithium-containing core to the cladding layer was 90: 10; the mixing process was performed under heating and stirring, in which, a heating temperature was 70°C, a stirring speed was 200 rpm, and a duration for the heating and stirring was 2 hrs; and
a resulting cathode lithium-supplementing additive mixture was subjected to a heat treatment in an inert atmosphere to obtain the cathode lithium-supplementing additive, in which, a temperature for the heat treatment was 200°C and a duration for the heat treatment was 3 hrs.

### Example A2

### Cathode lithium-supplementing additive and preparation method thereof

A cathode lithium-supplementing additive includes a lithium-containing core and a cladding layer formed on a surface of the lithium-containing core. A material of the cladding layer includes a conductive hydrophobic polymer having a surface modified with a hydrophobic enhancer. The hydrophobic enhancer is selected from dodecafluoroheptylpropylmethyldimethoxysilane, the conductive hydrophobic polymer is selected from polyaniline, and the lithium-containing core is selected from Li₂CuO₂. A particle size of the lithium-containing core is about 1 µm, and a thickness of the cladding layer is about 20 nm.

The cathode lithium-supplementing additive was prepared by the following steps:
the lithium-containing material as the core body, the hydrophobic enhancer, and the conductive hydrophobic polymer were provided according to the cathode lithium-supplementing additive of Example A2;
the conductive hydrophobic polymer and the hydrophobic enhancer were mixed in a first organic solvent at 45°C for 60 mins, and then dried at 90°C for 4 hrs to obtain the conductive hydrophobic polymer having the surface modified with the hydrophobic enhancer, in which, a mass ratio of the conductive hydrophobic polymer, the hydrophobic enhancer, and the first organic solvent was 100:0.5:200, and the first organic solvent was selected from ethanol;
the conductive hydrophobic polymer having the surface modified with the hydrophobic enhancer and an organic solvent were mixed ultrasonically to obtain a polymer mixture, in which, a mass ratio of the conductive hydrophobic polymer to the organic solvent was 1:500, and the organic solvent was selected from xylene;
thereafter, the polymer mixture and the lithium-containing material as the core body were subjected to a mixing process, in which, a mass ratio of the lithium-containing core to the cladding layer was 92:8; the mixing process was performed under heating and stirring, in which, a heating temperature was 120°C, a stirring speed was 300 rpm, and a duration for the heating and stirring was 1.5 hrs; and
a resulting cathode lithium-supplementing additive mixture was subjected to a heat treatment in an inert atmosphere to obtain the cathode lithium-supplementing additive, in which, a temperature for the heat treatment was 400°C and a duration for the heat treatment was 3.5 hrs.

### Example A3

### Cathode lithium-supplementing additive and preparation method thereof

A cathode lithium-supplementing additive includes a lithium-containing core and a cladding layer formed on a surface of the lithium-containing core. A material of the cladding layer includes a conductive hydrophobic polymer having a surface modified with a hydrophobic enhancer. The hydrophobic enhancer is selected from dodecafluoroheptylpropylmethyldimethoxysilane, the conductive hydrophobic polymer is selected from polypyrrole, and the lithium-containing core is selected from Li₆MnO₄. A particle size of the lithium-containing core is about 3 µm, and a thickness of the cladding layer is about 40 nm.

The cathode lithium-supplementing additive was prepared by the following steps:
the lithium-containing material as the core body, the hydrophobic enhancer, and the conductive hydrophobic polymer were provided according to the cathode lithium-supplementing additive of Example A3;
the conductive hydrophobic polymer and the hydrophobic enhancer were mixed in a first organic solvent at 50°C for 90 mins, and then dried at 100°C for 6 hrs to obtain the conductive hydrophobic polymer having the surface modified with the hydrophobic enhancer, in which, a mass ratio of the conductive hydrophobic polymer, the hydrophobic enhancer, and the first organic solvent was 100:1:400, and the first organic solvent was selected from isopropanol;
the conductive hydrophobic polymer having the surface modified with the hydrophobic enhancer and an organic solvent were mixed ultrasonically to obtain a polymer mixture, in which, a mass ratio of the conductive hydrophobic polymer to the organic solvent was 1:300, and the organic solvent was selected from tetrahydrofuran;
thereafter, the polymer mixture and the lithium-containing material as the core body were subjected to a mixing process, in which, a mass ratio of the lithium-containing core to the cladding layer was 95:5; the mixing process was performed under heating and stirring, in which, a heating temperature was 100°C, a stirring speed was 400 rpm, and a duration for the heating and stirring was 2 hrs; and
a resulting cathode lithium-supplementing additive mixture was subjected to a heat treatment in an inert atmosphere to obtain the cathode lithium-supplementing additive, in which, a temperature for the heat treatment was 250°C and a duration for the heat treatment was 5 hrs.

### Example A4

### Cathode lithium-supplementing additive and preparation method thereof

A cathode lithium-supplementing additive includes a lithium-containing core and a cladding layer formed on a surface of the lithium-containing core. A material of the cladding layer includes a conductive hydrophobic polymer having a surface modified with a hydrophobic enhancer. The hydrophobic enhancer is selected from 1H,1H,2H,2H-perfluorodecyltrimethoxysilane, the conductive hydrophobic polymer is selected from polythiophene, and the lithium-containing core is selected from Li₂MnO₂. A particle size of the lithium-containing core is about 5 µm, and a thickness of the cladding layer is about 65 nm.

The cathode lithium-supplementing additive was prepared by the following steps:
the lithium-containing material as the core body, the hydrophobic enhancer, and the conductive hydrophobic polymer were provided according to the cathode lithium-supplementing additive of Example A4;
the conductive hydrophobic polymer and the hydrophobic enhancer were mixed in a first organic solvent at 50°C for 90 mins, and then dried at 120°C for 10 hrs to obtain the conductive hydrophobic polymer having the surface modified with the hydrophobic enhancer, in which, a mass ratio of the conductive hydrophobic polymer, the hydrophobic enhancer, and the first organic solvent was 100:1:500, and the first organic solvent was selected from n-butanol;
the conductive hydrophobic polymer having the surface modified with the hydrophobic enhancer and an organic solvent were mixed ultrasonically to obtain a polymer mixture, in which, a mass ratio of the conductive hydrophobic polymer to the organic solvent was 1:300, and the organic solvent was selected from tetrahydrofuran;
thereafter, the polymer mixture and the lithium-containing material as the core body were subjected to a mixing process, in which, a mass ratio of the lithium-containing core to the cladding layer was 97:3; the mixing process was performed under heating and stirring, in which, a heating temperature was 110°C, a stirring speed was 450 rpm, and a duration for the heating and stirring was 4 hrs; and
a resulting cathode lithium-supplementing additive mixture was subjected to a heat treatment in an inert atmosphere to obtain the cathode lithium-supplementing additive, in which, a temperature for the heat treatment was 350°C and a duration for the heat treatment was 5 hrs.

### Example A5

### Cathode lithium-supplementing additive and preparation method thereof

A cathode lithium-supplementing additive includes a lithium-containing core and a cladding layer formed on a surface of the lithium-containing core. A material of the cladding layer includes a conductive hydrophobic polymer having a surface modified with a hydrophobic enhancer. The hydrophobic enhancer is selected from 3,3,3-trifluoropropylmethyldimethoxysilane, the conductive hydrophobic polymer is selected from polyphenylene, and the lithium-containing core is selected from Li₂NiO₂. A particle size of the lithium-containing core is about 8 µm, and a thickness of the cladding layer is about 80 nm.

The cathode lithium-supplementing additive was prepared by the following steps:
the lithium-containing material as the core body, the hydrophobic enhancer, and the conductive hydrophobic polymer were provided according to the cathode lithium-supplementing additive of Example A5;
the conductive hydrophobic polymer and the hydrophobic enhancer were mixed in a first organic solvent at 50°C for 120 mins, and then dried at 80°C for 6 hrs to obtain the conductive hydrophobic polymer having the surface modified with the hydrophobic enhancer, in which, a mass ratio of the conductive hydrophobic polymer, the hydrophobic enhancer, and the first organic solvent was 100:2:500, and the first organic solvent was selected from ethanol;
the conductive hydrophobic polymer having the surface modified with the hydrophobic enhancer and an organic solvent were mixed ultrasonically to obtain a polymer mixture, in which, a mass ratio of the conductive hydrophobic polymer to the organic solvent was 1:450, and the organic solvent was selected from xylene;
thereafter, the polymer mixture and the lithium-containing material as the core body were subjected to a second mixing process, in which, a mass ratio of the lithium-containing core to the cladding layer was 98:2; the mixing process was performed under heating and stirring, in which, a heating temperature was 130°C, a stirring speed was 800 rpm, and a duration for the heating and stirring was 5 hrs; and
a resulting cathode lithium-supplementing additive mixture was subjected to a heat treatment in an inert atmosphere to obtain the cathode lithium-supplementing additive, in which, a temperature for the heat treatment was 400°C and a duration for the heat treatment was 7 hrs.

### Example A6

### Cathode lithium-supplementing additive and preparation method thereof

A cathode lithium-supplementing additive includes a lithium-containing core and a cladding layer formed on a surface of the lithium-containing core. A material of the cladding layer includes a conductive hydrophobic polymer having a surface modified with a hydrophobic enhancer. The hydrophobic enhancer is selected from 3,3,3-trifluoropropyltrimethoxysilane, the conductive hydrophobic polymer is selected from poly(p-phenylene vinylene), and the lithium-containing core is selected from Li₅FeO₄. A particle size of the lithium-containing core is about 10 µm, and a thickness of the cladding layer is about 100 nm.

The cathode lithium-supplementing additive was prepared by the following steps:
the lithium-containing material as the core body, the hydrophobic enhancer, and the conductive hydrophobic polymer were provided according to the cathode lithium-supplementing additive of Example A6;
the conductive hydrophobic polymer and the hydrophobic enhancer were mixed in a first organic solvent at 50°C for 100 mins, and then dried at 80°C for 6 hrs to obtain the conductive hydrophobic polymer having the surface modified with the hydrophobic enhancer, in which, a mass ratio of the conductive hydrophobic polymer, the hydrophobic enhancer, and the first organic solvent was 100:1:400, and the first organic solvent was selected from ethanol;
the conductive hydrophobic polymer having the surface modified with the hydrophobic enhancer and an organic solvent were mixed ultrasonically to obtain a polymer mixture, in which, a mass ratio of the conductive hydrophobic polymer to the organic solvent was 1:1000, and the organic solvent was selected from xylene;
thereafter, the polymer mixture and the lithium-containing material as the core body were subjected to a mixing process, in which, a mass ratio of the lithium-containing core to the cladding layer was 99:1; the second mixing process was performed under heating and stirring, in which, a heating temperature was 150°C, a stirring speed was 1000 rpm, and a duration for the heating and stirring was 6 hrs; and
a resulting cathode lithium-supplementing additive mixture was subjected to a heat treatment in an inert atmosphere to obtain the cathode lithium-supplementing additive, in which, a temperature for the heat treatment was 400°C and a duration for the heat treatment was 10 hrs.

### Example B 1

### Cathode plate

A cathode plate includes a cathode current collector and a cathode active material layer arranged on the cathode current collector. The cathode active material layer includes: a cathode active material LiFePO₄, a binder PVDF, a conductive agent SP, and a cathode lithium-supplementing additive, in which, the cathode lithium-supplementing additive is selected from the cathode lithium-supplementing additive provided in Example A1, and a mass percentage of the cathode lithium-supplementing additive in the cathode active material layer is 1%.

### Example B2

### Cathode plate

The cathode plate includes a cathode current collector and a cathode active material layer arranged on the cathode current collector. The cathode active material layer includes: a cathode active material LiFePO₄, a binder PVDF, a conductive agent SP, and a cathode lithium-supplementing additive, in which, the cathode lithium-supplementing additive is selected from the cathode lithium-supplementing additive provided in Example A2, and a mass percentage of the cathode lithium-supplementing additive in the cathode active material layer is 3%.

### Example B3

### Cathode plate

The cathode plate includes a cathode current collector and a cathode active material layer arranged on the cathode current collector. The cathode active material layer includes: a cathode active material LiFePO₄, a binder PVDF, a conductive agent SP, and a cathode lithium-supplementing additive, in which, the cathode lithium-supplementing additive is selected from the cathode lithium-supplementing additive provided in Example A3, and a mass percentage of the cathode lithium-supplementing additive in the cathode active material layer is 5%.

### Example B4

### Cathode plate

The cathode plate includes a cathode current collector and a cathode active material layer arranged on the cathode current collector. The cathode active material layer includes: a cathode active material LiFePO₄, a binder PVDF, a conductive agent SP, and a cathode lithium-supplementing additive, in which, the cathode lithium-supplementing additive is selected from the cathode lithium-supplementing additive provided in Example A4, and a mass percentage of the cathode lithium-supplementing additive in the cathode active material layer is 7%.

### Example B5

### Cathode plate

The cathode plate includes a cathode current collector and a cathode active material layer arranged on the cathode current collector. The cathode active material layer includes: a cathode active material LiFePO₄, a binder PVDF, a conductive agent SP, and a cathode lithium-supplementing additive, in which, the cathode lithium-supplementing additive is selected from the cathode lithium-supplementing additive provided in Example A5, and a mass percentage of the cathode lithium-supplementing additive in the cathode active material layer is 15%.

### Example B6

### Cathode plate

The cathode plate includes a cathode current collector and a cathode active material layer arranged on the cathode current collector. The cathode active material layer includes: a cathode active material LiFePO₄, a binder PVDF, a conductive agent SP, and a cathode lithium-supplementing additive, in which, the cathode lithium-supplementing additive is selected from the cathode lithium-supplementing additive provided in Example A6, and a mass percentage of the cathode lithium-supplementing additive in the cathode active material layer is 10%.

### Comparative Example A1

### Cathode lithium-supplementing additive and preparation method thereof

A cathode lithium-supplementing additive includes a lithium-containing core and an external conductive layer formed on the surface of the lithium-containing core, in which, the lithium-containing core is selected from Li₅FeO₄, a material of the external conductive layer is selected from a conductive hydrophobic polymer, and the conductive hydrophobic polymer is selected from a polyacetylene. A particle size of the lithium-containing core is about 200 nm, and the thickness of the outer conductive layer is about 10 nm.

The cathode lithium-supplementing additive was prepared by the following steps:
the lithium-containing material as the core body and the conductive hydrophobic polymer were provided according to the cathode lithium-supplementing additive of Comparative Example A1;
the conductive hydrophobic polymer and the organic solvent were mixed ultrasonically to obtain a polymer mixture, in which, a mass ratio of the conductive hydrophobic polymer to the organic solvent was 1:100, and the organic solvent was selected from n-hexane;
thereafter, the polymer mixture and the lithium-containing material as the core body were subjected to a mixing process, in which, a mass ratio of the lithium-containing core to the cladding layer was 90:10; the mixing process was performed under heating and stirring, in which, a heating temperature was 70°C, a stirring speed was 100 rpm, and a duration for the heating and stirring was 1 hrs; and
a resulting cathode lithium-supplementing additive mixture was subjected to a heat treatment in an inert atmosphere to obtain the cathode lithium-supplementing additive, in which, a temperature for the heat treatment was 200°C and a duration for the heat treatment was 3 hrs.

### Comparative example A2

### Cathode lithium-supplementing additive and preparation method thereof

A cathode lithium-supplementing additive includes a lithium-containing core and an external conductive layer formed on the surface of the lithium-containing core, in which, the lithium-containing core is selected from Li₅FeO₄, a material of the external conductive layer is selected from a carbon layer. A particle size of the lithium-containing core is about 8 nm, and the thickness of the outer conductive layer is about 80 nm.

The cathode lithium-supplementing additive was prepared by the following steps:
the lithium-containing material as the core body and the external conductive layer were provided according to the cathode lithium-supplementing additive of Comparative Example A1;
the conductive hydrophobic polymer and citric acid as a carbon source were ball milled to obtain a cathode lithium-supplementing additive mixture, in which, a mass ratio of the cathode lithium-supplementing additive mixture to citric acid was 90:10; and the cathode lithium-supplementing additive mixture was subjected to a heat treatment in an inert atmosphere to obtain the cathode lithium-supplementing additive, in which, a temperature for the heat treatment was 500°C and a duration for the heat treatment was 5 hrs.

### Comparative example A3

### Cathode lithium-supplementing additive and preparation method thereof

A cathode lithium-supplementing additive includes: a lithium-containing core, an intermediate hydrophobic layer formed on a surface of the lithium-containing core, and an external conductive layer arranged on a surface of the intermediate hydrophobic layer, in which, the lithium-containing core is selected from Li₅FeO₄, and a material of the intermediate hydrophobic layer is selected from a polyimide powder (PI powder), a material of the outer conductive layer is selected from a carbon layer. A particle size of the lithium-containing core is about 10 µm, a thickness of the middle hydrophobic layer is about 50 nm, and a thickness of the outer conductive layer is about 50 nm.

The cathode lithium-supplementing additive was prepared by the following steps:
the lithium-containing material as the core body and the hydrophobic polymer were provided according to the cathode lithium-supplementing additive of Comparative Example A2;
the conductive hydrophobic polymer and the hydrophobic polymer were ball milled to obtain a first mixture, in which, a mass ratio of the cathode lithium-supplementing additive mixture to the hydrophobic polymer was 99:1; and the first mixture was subjected to a heat treatment in an inert atmosphere to obtain a cathode lithium-supplementing additive cladding with a hydrophobic layer, in which, a temperature for the heat treatment was 400°C and a duration for the heat treatment was 10 hrs.
thereafter, the cathode lithium-supplementing additive cladded with the hydrophobic layer and citric acid as a carbon source were ball milled to obtain a second mixture, in which, a mass ratio of the cathode lithium-supplementing additive cladded with the hydrophobic layer to citric acid was 90:10; and the second mixture was subjected to a heat treatment in an inert atmosphere to obtain the cathode lithium-supplementing additive having a carbon layer as an outer layer and the cathode lithium-supplementing additive cladded with the hydrophobic layer as an intermediate layer, in which, a temperature for the heat treatment was 500°C and a duration for the heat treatment was 5 hrs.

### Comparative example B 1

### Cathode plate

The cathode plate includes a cathode current collector and a cathode active material layer arranged on the cathode current collector. The cathode active material layer includes: a cathode active material LiFePO₄, a binder PVDF, a conductive agent SP, and a cathode lithium-supplementing additive, in which, the cathode lithium-supplementing additive is selected from the cathode lithium-supplementing additive provided in Comparative Example A1, and a mass percentage of the cathode lithium-supplementing additive in the cathode active material layer is 15%.

### Comparative example B2

### Cathode plate

The cathode plate includes a cathode current collector and a cathode active material layer arranged on the cathode current collector. The cathode active material layer includes: a cathode active material LiFePO₄, a binder PVDF, a conductive agent SP, and a cathode lithium-supplementing additive, in which, the cathode lithium-supplementing additive is selected from the cathode lithium-supplementing additive provided in Comparative Example A2, and a mass percentage of the cathode lithium-supplementing additive in the cathode active material layer is 15%.

### Comparative example B3

### Cathode plate

The cathode plate includes a cathode current collector and a cathode active material layer arranged on the cathode current collector. The cathode active material layer includes: a cathode active material LiFePO₄, a binder PVDF, a conductive agent SP, and a cathode lithium-supplementing additive, in which, the cathode lithium-supplementing additive is selected from the cathode lithium-supplementing additive provided in Comparative Example A3, and a mass percentage of the cathode lithium-supplementing additive in the cathode active material layer is 10%.

### Performance testing and result analysis

(1) The conductive hydrophobic polymer, the lithium-supplementing core, and the cathode lithium-supplementing additive after being cladded provided in Example A2 were respectively performed with infrared spectrum analysis, as shown in FIG. 2. Comparing the infrared spectra of the lithium-supplementing core and the lithium-supplementing additive obtained after cladding treatment, it can be seen that before the cladding, the lithium-supplementing core has no absorption peak at the dotted line; after the cladding treatment, the obtained lithium-supplementing additive has obvious absorption peak at the dotted line. By comparison with the infrared spectrum of the conductive hydrophobic polymer, it can be seen that these three absorption peaks correspond to the absorption peaks of the conductive hydrophobic polymer, indicating that the preparation method of the lithium supplement additive successfully realizes the cladding of conductive hydrophobic polymer on the surface of the lithium-supplemented core and still maintains the original chemical structure of the conductive hydrophobic polymer without any change in chemical composition.
(2) Each of the cathode plates obtained in Examples B1 to B6 and Comparative Examples B1 to B3 was assembled with an anode plate, a separator, and an electrolyte to obtain a battery, in which, the anode plate was selected from a metal lithium plate, the separator was selected from a polypropylene microporous membrane, and the electrolyte was selected from a 1 mol/L LiPF₆ solution (ethylene carbonate and diethyl carbonate were mixed in a 1:1 volume ratio as a solvent), and the charge and discharge performance of the resulting battery was measured and the results are listed in Table 1.

**Table 1**

| Experimental group | No. | Initial charge specific capacity (mAh/g) | Initial discharge specific capacity (mAh/g) | Initial Coulombic efficiency (%) | Second cycle charge specific capacity (mAh/g) | Second cycle discharge specific capacity (mAh/g) | Second cycle Coulomb efficiency (%) |
|---|---|---|---|---|---|---|---|
| Example | B1 | 168.4 | 163.4 | 97.06% | 161.8 | 160.2 | 99.01% |
| | B2 | 166.1 | 161.6 | 97.32% | 160.0 | 158.3 | 98.94% |
| | B3 | 195.8 | 190.5 | 97.32% | 188.6 | 187.1 | 99.20% |
| | B4 | 181.5 | 176.3 | 97.16% | 174.5 | 172.9 | 99.08% |
| | B5 | 191.3 | 186.7 | 97.62% | 184.8 | 183.1 | 99.08% |
| | B6 | 198.5 | 193.1 | 97.28% | 191.2 | 189.7 | 99.22% |
| Comparative Example | B1 | 166.4 | 155.4 | 93.42% | 153.8 | 150.3 | 97.72% |
| | B2 | 170.3 | 160.1 | 94.04% | 158.5 | 158.5 | 97.67% |
| | B3 | 173.5 | 162.8 | 93.83% | 161.2 | 161.2 | 97.83% |

It can be seen from the results in Table 1 that in the batteries formed by assembling the cathode plates obtained in Examples B1 to B6, the initial charge specific capacity was 168.4mAh/g to 198.5mAh/g, the initial discharge specific capacity was 161.6mAh/g to 193.1mAh/g, the initial Coulombic efficiency was 97.06% to 97.62%, the second cycle charge specific capacity was 160.0mAh/g to 191.2mAh/g, the second cycle discharge specific capacity was 158.3mAh/g to 189.7mAh/g, and the Coulombic efficiency in the second cycle was 99.01% to 99.22%. in contrast, in the battery formed by assembling the cathode plates obtained in Comparative Examples B1 to Comparative Examples B3, the initial Coulombic efficiency was only 93.42% to 94.04%, and the Coulombic efficiency in the second cycle was only 97.67% to 97.83%. in particular, from the parallel comparison between Example B1 and Comparative Example B1, Example B5 and Comparative Example B2, and Example B6 and Comparative Example B3, it can be clearly seen that the charge and discharge specific capacities of the examples are significantly higher than those of the Comparative Examples. Based on the above, it can be seen that the lithium-supplementing additive provided in the present application, when being used in the electrode materials, can improve the reversible capacity and initial Coulombic efficiency.

The above are only optional embodiments of the present application and are not used to limit the present application. Various modifications and variations may be made to the present application by those skilled in the art. Any modifications, equivalent substitutions, improvements, etc. made within the spirit and principles of the present application shall be included in the scope of the claims of the present application.

## Claims

1. A cathode lithium-supplementing additive, **characterized in that** the cathode lithium-supplementing additive comprises: a lithium-containing core, and a cladding layer formed on a surface of the lithium-containing core, wherein a material of the cladding layer is selected from a conductive hydrophobic polymer having a surface modified with a hydrophobic enhancer.

2. The cathode lithium-supplementing additive according to claim 1, wherein a coverage rate of the cladding layer on the surface of the lithium-containing core is above 80%.

3. The cathode lithium-supplementing additive according to claim 1, wherein the hydrophobic enhancer is selected from a fluorine-containing silane coupling agent.

4. The cathode lithium-supplementing additive according to claim 3, wherein the fluorine-containing silane coupling agent comprises one or more of 1H,1H,2H,2H-perfluorodecyltriethoxysilane, dodecafluoroheptylpropylmethyldimethoxysilane, dodecafluoroheptylpropyltrimethoxysilane, 1H,1H,2H,2H-perfluorodecyltrimethoxysilane, 3,3,3-trifluoropropylmethyldimethoxysilane, 3,3,3-trifluoropropyltrimethoxysilane, 1H,1H,2H,2H-perfluorooctyltriethoxysilane, and 1H,1H,2H,2H-perfluorooctyltrimethoxysilane.

5. The cathode lithium-supplementing additive according to any one of claims 1-4, wherein the cladding layer comprises:
an inner layer, which has a structure of a backbone containing a conductive polymer, and
a protective outer layer, which has a structure of fluorine-containing branches self-polymerized at a surface of the conductive polymer of the inner layer to form a Si-O-Si grid structure, whereby being adsorbed to the surface of the conductive polymer.

6. The cathode lithium-supplementing additive according to any one of claims 1-4, wherein the conductive hydrophobic polymer comprises one or more of a polyacetylene, a polyaniline, a polypyrrole, a polythiophene, a polyphenylene, a poly(p-phenylene vinylene), and any derivative thereof.

7. The cathode lithium-supplementing additive according to any one of claims 1-4, wherein a material of the lithium-containing core comprises at least one of LiₓM_{y}O_{z} and Li_{w}A, wherein
0<x≤6, 0<y≤3, 0<z≤4, and 0<w≤5;
M comprises at least one of Fe, Co, Ni, Mn, V, Cu, Mo, Al, Ti, Mg, and Zr; and
A comprises at least one of C, N, O, P, S, F, B, and Se.

8. The cathode lithium-supplementing additive according to any one of claims 1-4, wherein a particle size of the lithium-containing core is 0.01 µm to 10 µm.

9. The cathode lithium-supplementing additive according to any one of claims 1-4, wherein a thickness of the cladding layer is 1 nm to 100 nm.

10. The cathode lithium-supplementing additive according to any one of claims 1-4, wherein a mass ratio of the lithium-containing core to the cladding layer is (90 to 99.9) : (0.1 to 10).

11. A method for preparing a cathode lithium-supplementing additive, **characterized by** comprising the following steps:
providing a lithium-containing material as a core body, a hydrophobic enhancer, and a conductive hydrophobic polymer according to the cathode lithium-supplementing additive according to any one of claims 1-10;
subjecting the conductive hydrophobic polymer and the hydrophobic enhancer to a first mixing process in a first organic solvent whereby obtaining the conductive hydrophobic polymer having the surface modified with the hydrophobic enhancer;
subjecting the conductive hydrophobic polymer having the surface modified with the hydrophobic enhancer and the lithium-containing material as the core body to a second mixing process in a second organic solvent, whereby obtaining a cathode lithium-supplementing additive mixture; and
post-processing the cathode lithium-supplementing additive mixture in an inert atmosphere, whereby obtaining the cathode lithium-supplementing additive.

12. The method for preparing the cathode lithium-supplementing additive according to claim 11, wherein
the first organic solvent is one or more selected from an alcohol solvent or an alcohol-water mixed solvent; and/or
the second organic solvent is one or more selected from benzene, toluene, xylene, tetrahydrofuran, 2-methyltetrahydrofuran, cyclohexane, n-hexane.

13. The method for preparing the cathode lithium-supplementing additive according to claim 11, wherein a mass ratio of the conductive hydrophobic polymer, the hydrophobic enhancer, and the first organic solvent is 100 : (0.2 to 2) : (100 to 1000).

14. The method for preparing the cathode lithium-supplementing additive according to claim 11, wherein a mass ratio of the conductive hydrophobic polymer having the surface modified with the hydrophobic enhancer, the lithium-containing material as the core body, and the second organic solvent is 1: (9 to 1000) : (50 to 1000).

15. The method for preparing the cathode lithium-supplementing additive according to claim 11, wherein the step of subjecting the conductive hydrophobic polymer and the hydrophobic enhancer to the first mixing process in the first organic solvent comprises: mixing the conductive hydrophobic polymer and the hydrophobic enhancer in the first organic solvent at 25°C to 80°C for 30 mins to 120 mins, and drying a resulting mixture at 80°C to 120°C for 3 hrs to 10 hrs.

16. The method for preparing the cathode lithium-supplementing additive according to claim 11, wherein the step of subjecting the conductive hydrophobic polymer having the surface modified with the hydrophobic enhancer and the lithium-containing material as the core body to the second mixing process in the second organic solvent comprises:
subjecting the conductive hydrophobic polymer having the surface modified with the hydrophobic enhancer and the second organic solvent to a third mixing process, whereby obtaining a polymer mixture; and
subjecting the polymer mixture and the lithium-containing material as the core body to a fourth mixing process;
wherein
in the step of the third mixing process, a condition for the third mixing process is one or more selected from heating dissolution, stirring, ultrasonic wave treatment, and ball milling; and
in the step of the fourth mixing process, the fourth mixing process is performed under heating and stirring, wherein a heating temperature is 50°C to 150°C, a stirring speed is 100 rpm to 1000 rpm, and a heating and stirring duration is 1 hr to 6 hrs.

17. The method for preparing the cathode lithium-supplementing additive according to claim 11, wherein the step of the post-processing comprises: performing heat treatment, in which, a temperature of the heat treatment is 200°C to 400°C, and a duration for the heat treatment is 3 hrs to 10 hrs.

18. A cathode plate, **characterized in that** the cathode plate comprises: a cathode current collector, and a cathode active material layer arranged on the cathode current collector;
the cathode active material layer comprises: a cathode active material, a binder, a conductive agent, and a cathode lithium-supplementing additive; and
the cathode lithium-supplementing additive is selected from the cathode lithium-supplementing additive according to any one of claims 1-10 or the cathode lithium-supplementing additive prepared by the method according to any one of claims 11-17.

19. The cathode plate according to claim 18, wherein an addition amount of the cathode lithium-supplementing additive accounts for 1 wt. % to 15 wt. % of a mass content of the cathode active material layer.

20. A secondary battery, **characterized by** comprising the cathode plate according to claim 18.
